# EUROPEAN PATENT APPLICATION

(11) **EP 4 797 551 A1**
(43) Date of publication of application: **26.08.2026**
(21) Application number: 26160060.5
(22) Date of filing: 23.02.2026
(51) Int. Cl.: H04B 7/024, H04B 7/06, H04W 84/12

(54) **COORDINATED BEAMFORMING IN AN OVERLAPPING BASIC SERVICE SET**

(30) Priority: 25.02.2025 US 202563763254 P; 26.02.2025 US 202563763612 P; 09.02.2026 US 202619533644
(71) Applicant: Samsung Electronics Co., Ltd., Suwon-si, Gyeonggi-do 16677 (KR)
(72) Inventor: MA, Yongsen, San Jose, CA, 95134 (US); YANG, Zigui, San Jose, CA, 95134 (US); YAN, Aiguo, San Jose, CA, 95134 (US); JEON, Eunsung, San Jose, CA, 95134 (US); KIM, Myeongjin, San Jose, CA, 95134 (US); KANDALA, Srinivas, San Jose, CA, 95134 (US)
(74) Representative: Kuhnen & Wacker Patent- und Rechtsanwaltsbüro PartG mbB

(57) **Abstract**

A system and a method are disclosed for coordinating for a coordinated beamforming, Co-BF, in an overlapping basic service set, BSS. The method includes detecting, with at least one of a first access point, AP, an overlapping BSS between a first AP (AP1) and a second AP (AP2) and transmitting, with the first AP (AP1), an indication of whether the first AP (AP1) received a cross-BSS channel state indicator, CSI, report (214c). The method also includes coordinating with the second AP (AP2) by the first AP (AP1), to perform a Co-BF based on the cross-BSS CSI report (214c).

## Description

### TECHNICAL FIELD

The disclosure generally relates to wireless systems. More particularly, the subject matter disclosed herein relates to improvements to coordinated beamforming (Co-BF) in an overlapping basic service set (OBSS).

### SUMMARY

In wireless networks, an access point (AP) can serve as a hub for a plurality of wireless network devices referred to as stations (STAs). The STAs are typically within a service area of an associated AP. The STAs may be fixed, mobile, semi-fixed, etc. The STAs may be communicatively coupled with at least the associated AP. That is, a given STA may be associated with only one AP but can communicate with non-associated APs. In addition, the STAs associated with a given AP typically do not communicate directly with each other within the wireless network. However, the STAs may have additional localized wireless features, such as Bluetooth, non-AP associated wireless fidelity (Wi-Fi) networks, ad hoc mesh networks, etc. A given STA can be in a service area of two or more APs. For example, a STA may be in a first service area associated with a first AP (AP1), a second service area associated with a second AP (AP2), and/or etc.

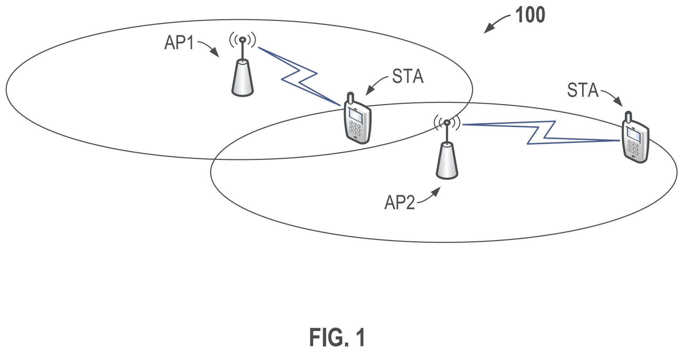

FIG. 1 is a schematic of an OBSS 100 between AP1 and AP2 according to an embodiment.

Referring to FIG. 1, two STAs are shown, where one of the STAs is located in service areas associated with both AP1 and AP2. However, the STA is only associated with AP1.

It should be appreciated that standards may use differing terms for similar functions. Accordingly, "access point" or "AP" may be used interchangeably with other terms, such as a "base station." As described herein, a wireless network of an AP and its associated STAs can be referred to as a basic service set (BSS). The term "OBSS" can refer to wireless networks that partially overlap. From a geographical perspective, OBSS can be viewed as overlapping service areas.

An AP can be any configuration of hardware and software comprising a backhaul equipment for connecting to a wired network, a baseband processor for signal processing of a baseband signal, a modulating unit to modulate and demodulate between the baseband signal and a transmission signal (e.g., received or to be transmitted), and an antenna that transmits and receives the transmission signal. The antenna may include arrays capable of shaping the antenna's radiation patterns into directional communication beams using, for example, constructive interference between signals emitted by radiating elements of the arrays.

Due to the OBSS, interference can occur in the transmission signals between a STA and two or more APs. Co-BF allows the APs of OBSSs to coordinate their respective transmissions. Accordingly, Co-BF can reduce the interference of the transmission signals.

In addition, one of the APs may be able to provide relatively superior service to a given STA than the other APs of the OBSS. For example, AP1 may be able to provide lower latency, greater signal strength, etc. than AP2. Accordingly, Co-BF methodology may determine that AP1 should service the STA.

Additionally, or alternatively, Co-BF may coordinate multiple APs to simultaneously provide service to the STA. That is, Co-BF may enable concurrent transmissions from two or more APs to each AP's associated STA while minimizing or reducing interference to OBSSs. However, knowledge of each APs transmission characteristics may be needed for effective Co-BF.

To solve this problem, cross-BSS CSI reports can be sent by one AP to another AP. Accordingly, AP1 and AP2 may share cross-BSS CSI reports. Additionally, or alternatively, an AP can overhear a cross-BSS report from unassociated STA(s). The cross-BSS CSI report can be used to ensure appropriate Co-BF.

One issue with the above approach is that sometimes the cross-BSS CSI report may not be received. As a result, the Co-BF may be uncoordinated and therefore result in continuing interference.

To overcome these issues, systems and methods are described herein for transmitting an indication of receipt of the cross-BSS CSI from one AP to another AP.

The above approaches improve on previous methods because instances of erroneous Co-BF procedures may be prevented.

In an embodiment, a method comprises detecting, with AP1, an OBSS between AP1 and AP2, and transmitting, with AP1, an indication of whether AP1 received a cross-BSS CSI report. The method can further comprise coordinating, with AP2 by the AP1, to perform a Co-BF procedure based on the cross-BSS CSI report.

In an embodiment, a system comprises AP1 having an OBSS with AP2, where AP1 is configured to transmit an indication of whether AP1 received the cross-BSS CSI report from AP2. AP1 is further configured to coordinate, with the second AP, to perform a Co-BF procedure based on the cross-BSS CSI report.

In an embodiment, an AP comprises a transmitter/receiver configured to communicate with another AP, a processing circuit communicatively coupled with the transmitter/receiver, the processing circuit being configured to detect an overlapping BSS with the other AP, send to the other AP, via the transmitter/receiver, an indication of whether the AP received a cross-BSS CSI report, and initiate a Co-BF procedure based on the cross-BSS CSI report.

In an embodiment, an AP comprises a transmitter/receiver configured to communicate with another AP and a processing circuit communicatively coupled with the transmitter/receiver. The processing circuit is configured to detect an overlapping BSS with another AP, receive one of an indication that the other AP received a cross-BSS CSI report or a request for the cross-BSS CSI report from the other AP, send, via the transmitter/receiver, the cross-BSS CSI report to the other AP based on the indication of whether the other AP received the cross-BSS CSI report or the request for the cross-BSS CSI report, and initiate a Co-BF procedure based on the cross-BSS CSI report.

### BRIEF DESCRIPTION OF THE DRAWING

In the following section, the aspects of the subject matter disclosed herein will be described with reference to exemplary embodiments illustrated in the figures, in which:
FIG. 1 is a schematic of an OBSS 100 between AP1 and AP2 according to an embodiment.
FIG. 2 is a transmission diagram 200 for Co-BF according to an embodiment.
FIG. 3 is a transmission diagram 300 for a cross-BSS status request and report from an initiating AP according to an embodiment.
FIG. 4 is a transmission diagram 400 for a cross-BSS CSI report from an initiating AP according to an embodiment.
FIG. 5 is a transmission diagram 500 for a bidirectional cross-BSS CSI report, request, or acknowledgment according to an embodiment.
FIG. 6 is a transmission diagram 600 for a bidirectional cross-BSS CSI report, request, or acknowledgment according to an embodiment.
FIG. 7 is a transmission diagram 700 for a cross-BSS CSI status request from an initiating AP according to an embodiment.
FIG. 8 is a transmission diagram 800 for a cross-BSS CSI report from an initiating AP with retransmissions according to an embodiment.
FIG. 9 is a transmission diagram 900 for a cross-BSS CSI acknowledgment according to an embodiment.
FIG. 10 is a transmission diagram 1000 for a cross-BSS CSI request from a responding AP according to an embodiment.
FIG. 11 is a method for Co-BF in an OBSS according to an embodiment.
FIG. 12 is a block diagram of an electronic device in a network environment, according to an embodiment.
FIG. 13 shows a system 1300 including a STA 1305 and an AP 1310, in communication with each other according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "picot," etc.). Such occasional interchangeable uses shall not be considered inconsistent with each other.

It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The quality of a transmission between an AP and a STA can be encapsulated in a channel state information (CSI) report. A CSI report may include information on the physical layer measurements of the condition of a transmission channel. The CSI report can contain information related to fading, scattering, power decay, etc. of a signal propagating through the channel. The CSI report may be based on statistical, instantaneous, or similar determined values. The CSI reports can be based on channel state estimation procedures that use, for example, a CSI reference signal (e.g., pilot) sent over the channel. The CSI report may indicate how well a STA will receive a signal transmitted by an AP. The CSI reference signals may be used in sounding techniques.

Sounding techniques may involve an AP sending the pilot signal to a STA and the STA subsequently responding with information on how well the STA received the pilot signal. The measurements and information that a STA performs and provides can be referred to as CSI feedback.

Sequential sounding may refer to sending a pilot signal over a particular channel, such as between a specific transmit and receive antennas, to generate a CSI report about that particular channel. In sequential sounding, the pilot signal may be sent from different APs at different times.

In joint sounding, the pilot signals are sent to multiple STAs simultaneously. The STAs may also respond simultaneously or sequentially with information about how well the pilot signals were heard. Joint sounding can be more efficient than sequential sounding.

Cross-BSS sounding may include an AP transmitting a signal to non-associated STAs, such as those in overlapping service areas, which then provide information on how well the signal was received by the non-associated STA.

Cross-BSS CSI reports can be used by the APs in Co-BF procedures. With more particularity, sequential and/or joint sounding can be used to generate and share Cross-BSS CSI reports so that the APs can perform Co-BF. These processes may be governed by standards. For example, The Institute of Electrical and Electronics Engineers (IEEE) P802.11bn/D0.1 standard defines explicit feedback mechanisms, e.g., Ultra High Reliability Trigger Based (UHR TB) sequential/joint null data packet (NDP) sounding, for in-BSS sounding and cross-BSS sounding to measure and report the CSI. However, following the standards' procedures can result in one AP without an associated STA's cross-BSS CSI report, or one AP without knowing whether another AP received a cross-BSS or not.

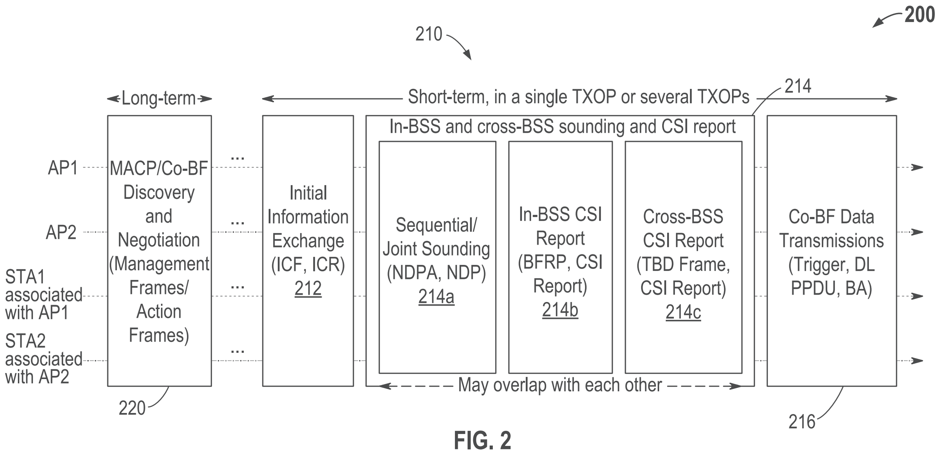

FIG. 2 is a transmission diagram 200 according to an embodiment.

Referring to FIG. 2, the transmission diagram 200 includes horizontal lines labeled AP1, AP2, STA1, and STA2 to respectively indicate a first and second AP, and a first and second STA. The horizontal lines of the STA and the APs represent a network of devices in communication with each other. The transmission diagram 200 also includes a short-term sequence 210 and a long-term sequence 220 that covers the network's four devices. The long-term sequence 220 may be comprised of a multi-AP coordination (MAPC)/Co-BF discovery and negotiation that involves management frames/action frames.

The short-term sequence 210 includes an initial information exchange 212 comprises an initial control frame (ICF) and an initial control response (ICR), although any suitable initializing protocols related to coordinating transmissions can be employed. The ICF and the ICR may be transmitted between APs. The ICF and the ICR may also be transmitted between an AP and an in-BSS STA. The short-term sequence 210 also includes in-BSS and cross-BSS sounding and CSI report 214. The in-BSS and cross-BSS sounding and CSI report 214 comprises a sequential sounding step 214a, an in-BSS CSI report 214b, and a cross-BSS CSI report 214c. The sequential sounding step 214a may be comprised of an invite/response sounding between APs to perform NDP sounding with in-BSS STAs and cross-BSS STAs. After the in-BSS CSI report 214b and cross-BSS CSI report 214c are obtained, an invite/response may be transmitted between the APs. In addition, a trigger may be sent to the STAs to initiate data transmissions.

The short-term sequence 210 can therefore further include a Co-BF data transmission 216. As shown, the Co-BF data transmission 216 may include a trigger, DL, physical layer protocol data unit (PPDU), block acknowledgment request (BAR), and block acknowledgment (BA). For example, the Co-BF APs can send a multi-user BAR (MU-BAR) to solicit a BA from STAs associated with an initiating AP and a responding AP. After or during sequential/joint sounding, an initiating AP and a responding AP may respectively confirm receipt of the in-BSS and cross-BSS CSI reports and may be ready to perform Co-BF data transmissions. Accordingly, the Co-BF may be performed with each AP having in-BSS and cross-BSS CSI reports from in-BSS (associated) and cross-BSS (unassociated) STAs, respectively. The APs can obtain the cross-BSS CSI report through various communication modes.

For example, an AP can overhear the CSI feedback from an unassociated STA(s) over-the-air. This is advantageous in that it does not need extra airtime for the cross-BSS CSI report and there is low overhead. Overhearing can be used, for example, in security setup and when ensuring good link quality between the AP and unassociated STA(s).

Additionally, or alternatively, an AP can also forward the CSI feedback to another AP over-the-air. Sending the CSI feedback over-the-air may not require overhearing or backhaul capabilities and can shift the processing and complexity to APs. In some cases, sending the CSI feedback over-the-air could be more reliable than the overhearing method. Sending the CSI feedback over-the-air can be used in wireless AP-to-AP communications. The over-the-air communication mode may be used in, for example, cases of extra airtime for cross-BSS setup/CSI report.

Also additionally, or alternatively, an AP can forward the CSI feedback to another AP over the wired backhaul. Sending a CSI feedback over the wired backhaul does not require extra airtime for cross-BSS CSI report and may be a low overhead transmission. Sending the CSI feedback over the wired backhaul could be more reliable than the overhearing method and over-the-air forwarding method. Sending the CSI feedback over the wired backhaul can be employed where wired backhaul connection may be present between APs and there is signaling/coordination between the wired backhaul and wireless connections.

For all three communication modes, to send and/or receive the cross-BSS CSI feedback each AP may confirm with the other AP about their current status. The current status may be that, for example, the AP that is ready to perform cross-BSS CSI report transmission, the AP received the compressed beamforming/channel quality indicator (CQI) frame (in-BSS/cross-BSS), the AP is ready for Co-BF data transmissions, etc.

Additionally, or alternatively, each AP may also notify/trigger its associated Co-BF non-AP STAs about the current status and/or next actions. For example, each AP may notify/trigger such STAs that both APs received the compressed beamforming/CQI frame (in-BSS/cross-BSS), both APs may be ready for Co-BF data transmission, the associated non-AP STAs should be prepared for sounding, CSI feedback, Co-BF data transmissions and BA, etc.

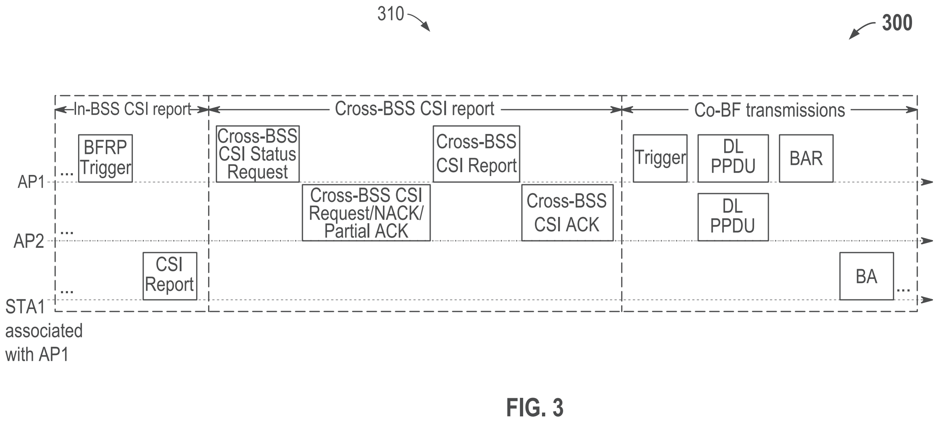

An AP can initiate a cross-BSS CSI report sequence in any suitable matter. For example, an initiating AP can send a request, an acknowledgment, a cross-BSS CSI report, etc. That is, the cross-BSS CSI report sequence does not need to begin with a request for a cross-BSS CSI report or by sending the cross-BSS CSI report. Because the cross-BSS CSI report sequence can be initiated in different ways, suitable communication modes can be employed. The following describes exemplary cross-BSS CSI report sequences with reference to FIGS. 3 through 9.

An indication of whether an AP, such as AP2, received a cross-BSS CSI report can be provided in various ways. For example, a frame in a transmission from AP2 to AP1 may include one or more bits indicating AP2 has the same cross-BSS CSI report. Additionally, or alternatively, AP2 could send one or more bits indicating that they did not receive a cross-BSS CSI report. The indication can be sent via any suitable layer in a communications protocol. For example, the notification could be sent via a media access control (MAC) layer defined by a Wi-Fi standard.

The frame or packet use to transmit the indication that AP2 received or is in possession of the cross-BSS CSI report may be previously defined or newly defined. For example, a frame or packet can include bits or fields that can be employed or reassigned to indicate that AP2 has or received the cross-BSS CSI report. The following describes various embodiments of such an indication.

FIG. 3 is a transmission diagram 300 for a cross-BSS CSI status request and report from an initiating AP according to an embodiment.

Referring to FIG. 3, the transmission diagram 300 includes a cross-BSS CSI report sequence 310. The cross-BSS CSI report sequence 310 includes transmissions between AP1 and AP2. In the cross-BSS CSI report sequence 310, AP1 sends a cross-BSS CSI status request to AP2. AP2 responds with a cross-BSS CSI request acknowledgment. AP1 subsequently sends a cross-BSS CSI report to AP2 which responds with a second cross-BSS CSI report acknowledgment. Therefore, in accordance with the cross-BSS CSI report sequence 310 of FIG. 3, AP1 can check the status of AP2 and optionally forward the cross-BSS CSI report to AP2 when AP2 indicates, in response to the status request, that it did not receive the cross-BSS CSI report. The transmission sequence of the cross-BSS CSI report sequence 310 can work for all communication modes: overhearing and forwarding over the backhaul/air. However, depending on the communication mode, the transmission sequence may need extra airtime for AP1 to check AP2's status and to forward cross-BSS CSI feedback to AP2.

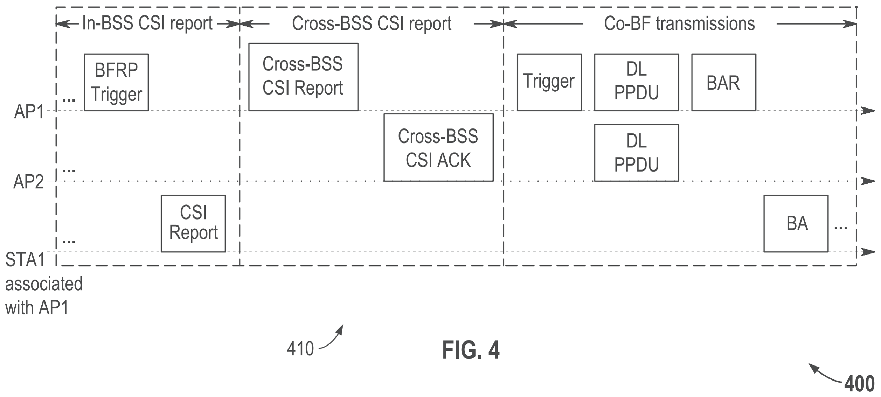

FIG. 4 is a transmission diagram 400 for a cross-BSS CSI report from an initiating AP according to an embodiment.

Referring to FIG. 4, the transmission diagram 400 includes a cross-BSS CSI report sequence 410. The cross-BSS CSI report sequence 410 begins with a cross-BSS CSI report being transmitted by AP1 to AP2. In response, AP2 sends a cross-BSS CSI ACK to AP1. Accordingly, both AP1 and AP2 have the cross-BSS CSI report. In addition, AP1 knows that AP2 has the cross-BSS CSI report. That is, in the transmission diagram 400 AP1 directly forwards cross-BSS CSI report to AP2 without requesting an acknowledgement from AP2. The extra airtime needed for a request and responsive acknowledgment is not used. The cross-BSS CSI report sequence 410 can work for all cases: overhearing, forwarded over the backhaul/air.

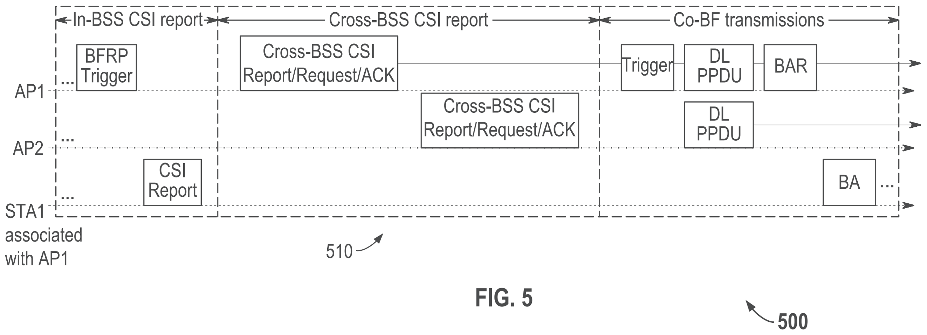

FIG. 5 is a transmission diagram 500 for a bidirectional cross-BSS CSI report, request, or acknowledgment according to an embodiment.

Referring to FIG. 5, the transmission diagram 500 includes a cross-BSS CSI report sequence 510. The cross-BSS CSI report sequence 510 shown in FIG. 5 can be from an initiating AP to a responding AP. The cross-BSS CSI report sequence 510 includes a cross-BSS CSI Report, Request, or ACK initiated by AP1. The cross-BSS CSI report sequence 510 also includes a subsequent cross-BSS CSI Report, Request, or ACK sent by AP2.

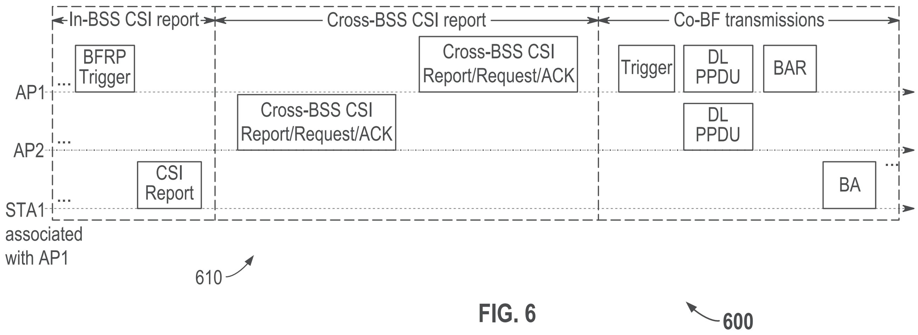

FIG. 6 is a transmission diagram 600 for the bidirectional cross-BSS CSI report, request, or acknowledgment described with reference to FIG. 5 according to an embodiment.

Referring to FIG. 6, similar to FIG. 5, the transmission diagram 600 includes a cross-BSS CSI report sequence 610. The cross-BSS CSI report sequence 610 shown in FIG. 6 can be from a responding AP to the initiating AP. The cross-BSS CSI report sequence 610 includes a cross-BSS CSI Report, cross-BSS CSI Request, or ACK initiated by AP2. The cross-BSS CSI report sequence 610 also includes a subsequent cross-BSS CSI Report, Request, or ACK sent by AP1.

The cross-BSS CSI report sequences 510, 610 may contain a cross-BSS CSI fail check. The cross-BSS CSI reception fail check can indicate to AP1 that AP2 failed to receive a cross-BSS CSI report from STA1. If the cross-BSS CSI reception fails, a retransmission from an NDPA may occur. Other options may be available if the cross-BSS CSI reception fails. For example, AP1 and/or AP2 may simply continue with Co-BF or a coordinated spatial reuse (Co-SR), a cross-BSS CSI report retransmission can occur, restart sounding/Co-BF can be restarted, coordinated time-division multiple access (Co-TDMA) may be performed, or AP1 or AP2 takes over for non-coordinated transmission.

With reference to FIGS. 5 and 6, the cross-BSS CSI report sequences 510, 610 includes a transmission sequence where AP1 and AP2 may check the status of each AP and/or send cross-BSS CSI report bidirectionally and/or after sequential/joint sounding and before Co-BF transmission.

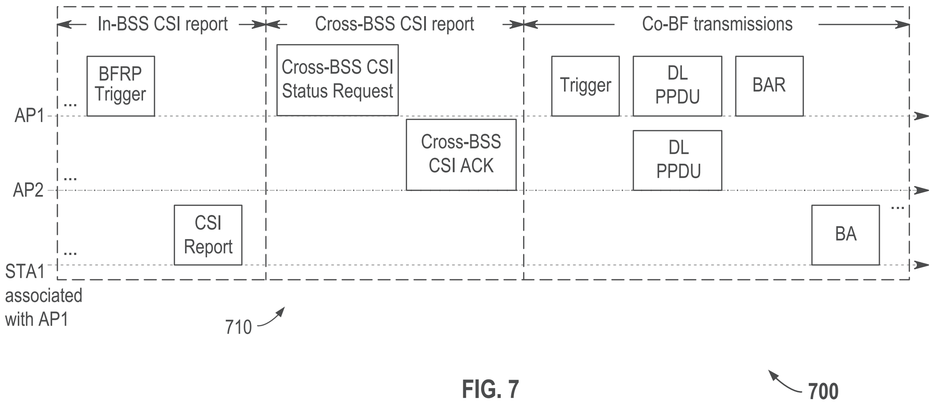

FIG. 7 is a transmission diagram 700 for a cross-BSS CSI status request from an initiating AP according to an embodiment.

Referring to FIG. 7, the transmission diagram 700 includes a cross-BSS CSI report sequence 710. The cross-BSS CSI report sequence 710 can work if AP2 already received the CSI report by overhearing from STA1 or forwarded from AP1 over backhaul. There may be small overhead if AP2 already received the cross-BSS CSI report. The cross-BSS CSI report sequence 710 can provide extra time and signaling for AP2 to make sure the cross-BSS CSI report is ready.

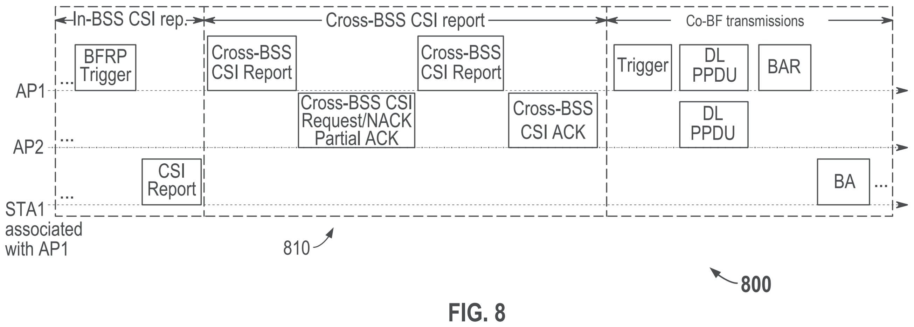

FIG. 8 is a transmission diagram 800 for a cross-BSS CSI report from an initiating AP with retransmissions according to an embodiment.

Referring to FIG. 8, the transmission diagram 800 includes a cross-BSS CSI report sequence 810. The cross-BSS CSI report sequence 810 is comprised of a cross-BSS CSI ACK. That is, the cross-BSS CSI report sequence 810 is comprised of a single transmission sent by AP2 to AP1 acknowledging receipt or possession of a cross-BSS CSI report. The cross-BSS CSI ACK can work for all cases: overhearing, forwarded over the backhaul/air.

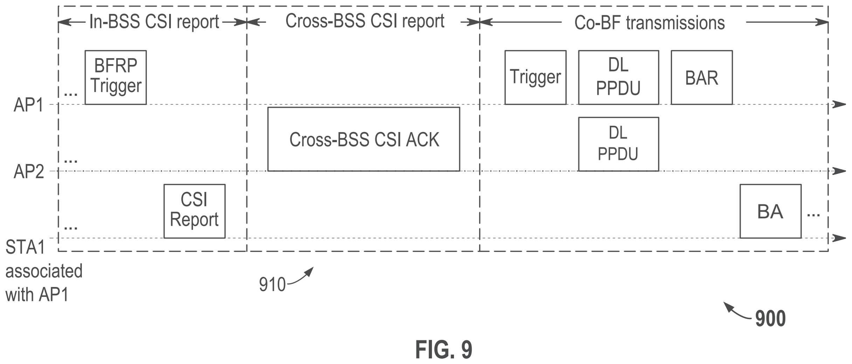

FIG. 9 is a transmission diagram 900 for a cross-BSS CSI acknowledgment from a responding AP according to an embodiment.

Referring to FIG. 9, the transmission diagram 900 comprises a cross-BSS CSI report sequence 910. The cross-BSS CSI report sequence 910 is comprised of a cross-BSS CSI request sent by AP2 to AP1, a cross-BSS CSI report sent by AP 1 to AP2, and a cross-BSS CSI ACK. The cross-BSS CSI report sequence 910 can work for all communication modes: overhearing and forwarded over the backhaul/air.

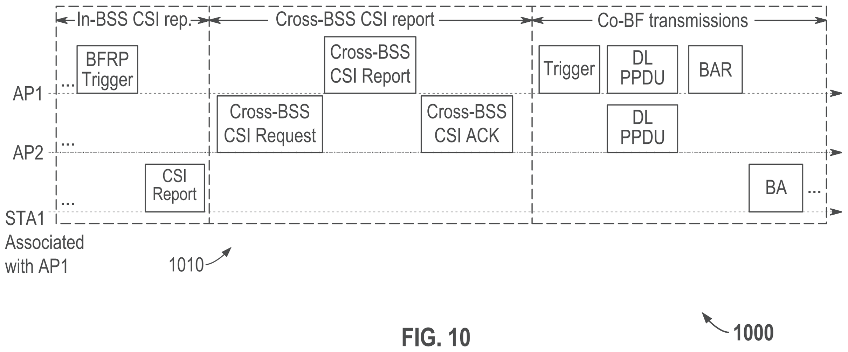

FIG. 10 is a transmission diagram 1000 for a cross-BSS CSI request from a responding AP.

Referring to FIG. 10, the transmission diagram 1000 comprises a cross-BSS CSI report sequence 1010. The cross-BSS CSI report sequence 1010 comprises a cross-BSS CSI request send by AP2 to AP1. AP1 responds by transmitting a cross-BSS CSI report. AP2 replies with a cross-BSS CSI ACK. The cross-BSS CSI report sequence 1010 can work for all cases: overhearing and forwarding over backhaul or over-the-air. The cross-BSS CSI request may be combined with cross-BSS CSI acknowledgment or beamforming report pull (ACK/BFRP). AP2 may require knowledge that AP1 and STA1 may be ready for cross-BSS CSI report.

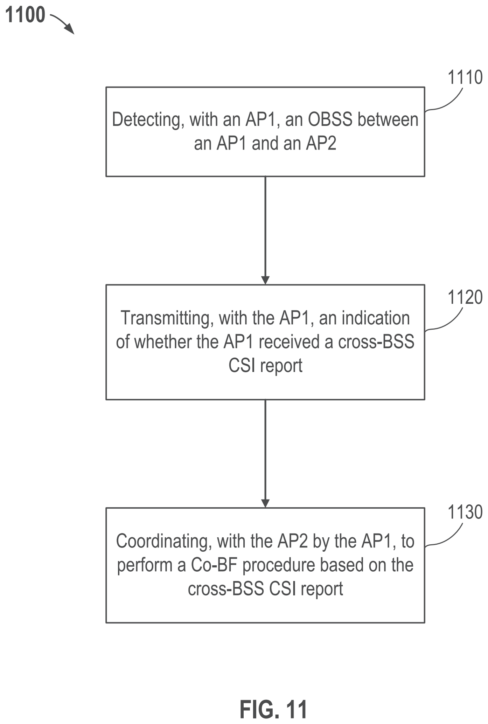

FIG. 11 is a method 1100 for Co-BF in an OBSS according to an embodiment.

Referring to FIG. 11 the method 1100 may detect, with an AP1, an OBSS between an AP1 and an AP2 in step 1110. In step 1120, the method 1100 can transmit, with the AP1, an indication of whether the AP1 received a cross-BSS CSI report. In step 1130, the method 1100 can coordinate, with the AP2 by the AP1, to perform a Co-BF procedure based on the cross-BSS CSI report.

The method 1100 may further comprise the first AP transmitting the indication by transmitting one of a receipt indication that the first AP received the cross-BSS CSI report and a failed receipt indication that the first AP did not receive the cross-BSS CSI report. Additionally, or alternatively, the method may further comprise receiving, with the second AP, the indication of whether the first AP received the cross-BSS CSI report. The method may also further comprise the first AP indicating the receipt of the cross-BSS CSI report by one of transmitting over-the-air, overhearing, and transmitting via a wired backhaul connection the indication of the receipt of the cross-BSS CSI report to the second AP.

The method 1100 may further comprise the first AP indicating receipt of the cross-BSS CSI report by transmitting, with the first AP, a frame including one or more indication bits. The frame may include the one or more indication bits is employed in protocols unrelated to the indication of whether the first AP received the cross-BSS CSI report. Additionally, or alternatively, the frame may include the one or more indication bits is transmitted in a media access control (MAC) layer of a transmission received by the second AP. The method 1100 may further comprise transmitting the indication of whether the first AP received the cross-BSS CSI report in response to the first AP receiving a request from the second AP.

The method 1100 may further comprise one of the second AP and the first AP initiating the transmission, by the first AP, of the indication of whether the first AP received the cross-BSS CSI report. The method 1100 may additionally comprise transmitting, with the second AP, the cross-BSS CSI report to the second AP and receiving, with the first AP, the cross-BSS CSI report.

Various considerations may be related to the MAC layer. For example, a Co-BF AP may only initiate Co-BF procedure/transmission if the transmission opportunity (TXOP) can be longer than a TXOP length threshold, such as a threshold of certain length, such that the data transmission part can be of sufficient length, so that Co-BF gains can be sufficient to justify the MAC overhead (e.g., ICF/ICR, NDP sounding, in-BSS/cross-BSS CSI feedback, and block acknowledgment request/block acknowledgment (BAR/BA)). The TXOP length threshold can be calculated depending on different scenarios.

In addition, a Co-BF non-AP STA may be required to be available for the negotiated parameters (e.g., channel, bandwidth, and time window) during the Co-BF TXOP(s). This can reduce potential errors, retransmissions, interruptions, and/or switching operations during Co-BF TXOP(s). Some power management or related features, such as dynamic power save (DPS), dual operation (DUO), null frame power save, control acknowledgment (NPCA), dynamic STA operation (DSO), PM=1, etc., may be limited/disabled for the non-AP STAs participating in Co-BF. Some possible exceptions include certain Co-BF non-AP STAs may enter power save/unavailability mode depending on the Co-BF type (sequential/joint sounding) and scheduling within the Co-BF TXOP(s).

Aspects of some embodiments may enable cross-BSS CSI feedback from Co-BF. To balance different system requirements such as performance, overhead, complexity, flexibility, etc., some embodiments may include cross-BSS CSI status Request/Report initiated from the initiating AP or bidirectional cross-BSS CSI Report/Request/ACK initiated from the initiating/responding AP.

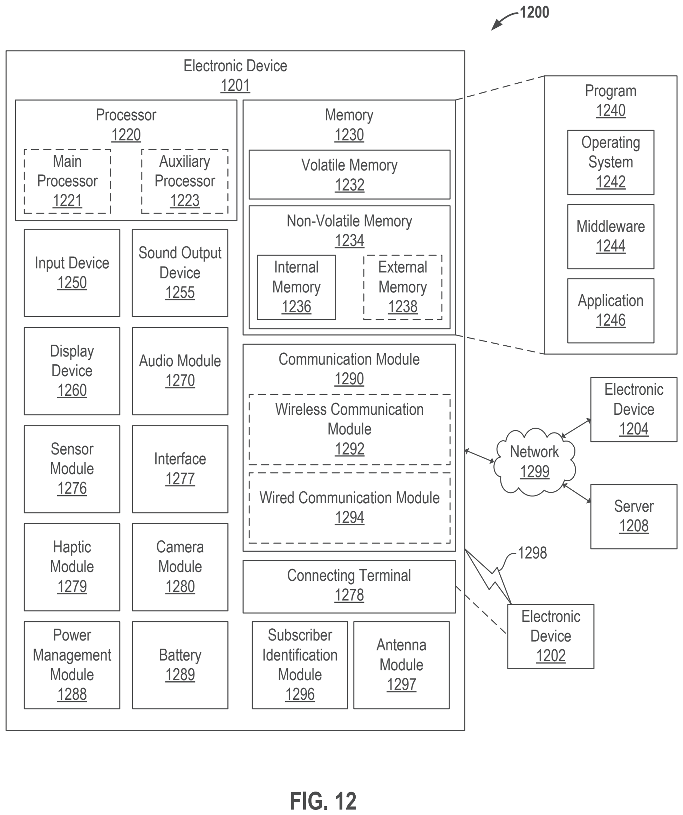

FIG. 12 is a block diagram of an electronic device in a network environment 1200, according to an embodiment.

Referring to FIG. 12, an electronic device 1201 in a network environment 1200 may communicate with an electronic device 1202 via a first network 1298 (e.g., a short-range wireless communication network), or an electronic device 1204 or a server 1008 via a second network 1299 (e.g., a long-range wireless communication network). The electronic device 1201 may communicate with the electronic device 1204 via the server 1208. The electronic device 1201 may include a processor 1220, a memory 1230, an input device 1250, a sound output device 1255, a display device 1260, an audio module 1270, a sensor module 1276, an interface 1277, a haptic module 1279, a camera module 1280, a power management module 1288, a battery 1289, a communication module 1290, a subscriber identification module (SIM) card 1296, or an antenna module 1297. In one embodiment, at least one (e.g., the display device 1260 or the camera module 1280) of the components may be omitted from the electronic device 1201, or one or more other components may be added to the electronic device 1201. Some of the components may be implemented as a single integrated circuit (IC). For example, the sensor module 1276 (e.g., a fingerprint sensor, an iris sensor, or an illuminance sensor) may be embedded in the display device 1260 (e.g., a display).

The processor 1220 may execute software (e.g., a program 1240) to control at least one other component (e.g., a hardware or a software component) of the electronic device 1201 coupled with the processor 1220 and may perform various data processing or computations. For example, the processor 1220 can transmit an indication that a cross-BSS CSI report has been received to AP1. The processor 1220 can accordingly execute programs for Co-BF using the same cross-BSS CSI report as another AP.

As at least part of the data processing or computations, the processor 1220 may load a command or data received from another component (e.g., the sensor module 1276 or the communication module 1290) in volatile memory 1232, process the command or the data stored in the volatile memory 1232, and store resulting data in non-volatile memory 1234. The processor 1220 may include a main processor 1221 (e.g., a central processing unit (CPU) or an application processor), and an auxiliary processor 1223 (e.g., a graphics processing unit (GPU), an image signal processor (ISP), a sensor hub processor, or a communication processor (CP)) that is operable independently from, or in conjunction with, the main processor 1221. Additionally or alternatively, the auxiliary processor 1223 may be adapted to consume less power than the main processor 1221, or execute a particular function. The auxiliary processor 1223 may be implemented as being separate from, or a part of, the main processor 1221.

The auxiliary processor 1223 may control at least some of the functions or states related to at least one component (e.g., the display device 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). The auxiliary processor 1223 (e.g., an image signal processor or a communication processor) may be implemented as part of another component (e.g., the camera module 1280 or the communication module 1290) functionally related to the auxiliary processor 1223.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234. Non-volatile memory 1234 may include internal memory 1236 and/or external memory 1238.

The program 1240 may be stored in the memory 1230 as software, and may include, for example, an operating system (OS) 1242, middleware 1244, or an application 1246.

The input device 1250 may receive a command or data to be used by another component (e.g., the processor 1220) of the electronic device 1201, from the outside (e.g., a user) of the electronic device 1201. The input device 1250 may include, for example, a microphone, a mouse, or a keyboard.

The sound output device 1255 may output sound signals to the outside of the electronic device 1201. The sound output device 1255 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1260 may visually provide information to the outside (e.g., a user) of the electronic device 1201. The display device 1260 may include, for example, a display, a hologram device, or a projector and control circuitry to control a corresponding one of the display, hologram device, and projector. The display device 1260 may include touch circuitry adapted to detect a touch, or sensor circuitry (e.g., a pressure sensor) adapted to measure the intensity of force incurred by the touch.

The audio module 1270 may convert a sound into an electrical signal and vice versa. The audio module 1270 may obtain the sound via the input device 1250 or output the sound via the sound output device 1255 or a headphone of an external electronic device 1202 directly (e.g., wired) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. The sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device 1202 directly (e.g., wired) or wirelessly. The interface 1277 may include, for example, a high- definition multimedia interface (HDMI), a universal serial bus (USB) interface, a secure digital (SD) card interface, or an audio interface.

A connecting terminal 1278 may include a connector via which the electronic device 1201 may be physically connected with the external electronic device 1202. The connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or a movement) or an electrical stimulus which may be recognized by a user via tactile sensation or kinesthetic sensation. The haptic module 1279 may include, for example, a motor, a piezoelectric element, or an electrical stimulator.

The camera module 1280 may capture a still image or moving images. The camera module 1080 may include one or more lenses, image sensors, image signal processors, or flashes. The power management module 1288 may manage power supplied to the electronic device 1201. The power management module 1288 may be implemented as at least part of, for example, a power management integrated circuit (PMIC).

The battery 1289 may supply power to at least one component of the electronic device 1201. The battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the AP) and supports a direct (e.g., wired) communication or a wireless communication. The communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as BLUETOOTH^{™}, wireless-fidelity (Wi-Fi) direct, or a standard of the Infrared Data Association (IrDA)) or the second network 1299 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The antenna module 1297 may transmit or receive a signal or power to or from the outside (e.g., the external electronic device) of the electronic device 1201. The antenna module 1297 may include one or more antennas, and, therefrom, at least one antenna appropriate for a communication scheme used in the communication network, such as the first network 1198 or the second network 1299, may be selected, for example, by the communication module 1190 (e.g., the wireless communication module 1292). The signal or the power may then be transmitted or received between the communication module 1290 and the external electronic device via the selected at least one antenna.

Commands or data may be transmitted or received between the electronic device 1201 and the external electronic device 1204 via the server 1208 coupled with the second network 1299. Each of the electronic devices 1202 and 1204 may be a device of a same type as, or a different type, from the electronic device 1201. All or some of operations to be executed at the electronic device 1201 may be executed at one or more of the external electronic devices 1202, 1204. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1201. The electronic device 1201 may provide the outcome, with or without further processing of the outcome, as at least part of a reply to the request. To that end, a cloud computing, distributed computing, or clientserver computing technology may be used, for example.

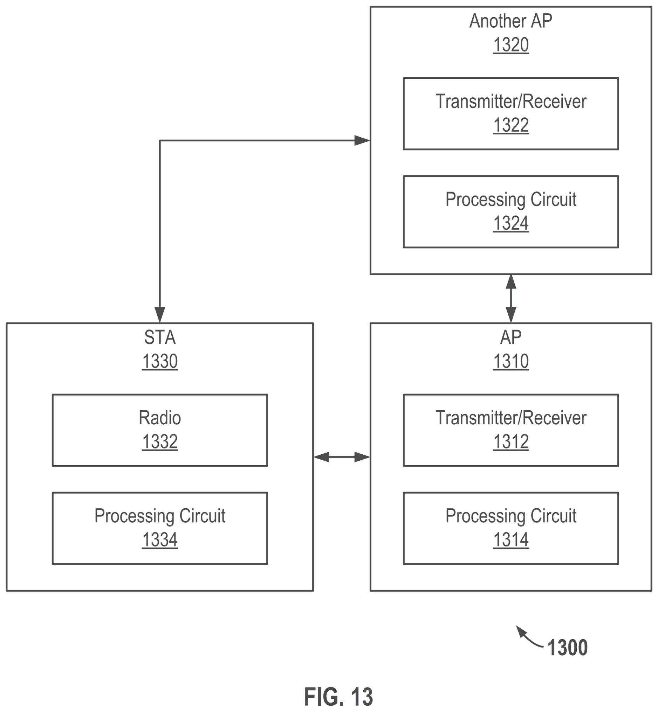

FIG. 13 shows a system including a an AP 1310, another AP 1320 and a STA 1330. The AP 1310, the another AP 1320, and the STA 1330 may be in communication with each other depending on whether the STA 1330 is associated with the AP 1310That is, the solid arrows between the AP 1310, the another AP 1320, and the STA 1330 do not necessarily depict an association between the STA 1330 and one of the AP 1310 and the another AP 1320.

Referring to FIG. 13, the STA 1330 may include a radio 1332 and a processing circuit (or a means for processing) 1334, which may perform various methods disclosed herein, e.g., the method illustrated in FIGs. 3-11. For example, the processing circuit 1334 may receive, via the radio 1332, transmissions from the AP 1310, and the processing circuit 1334 may transmit, via the radio 1332, signals to the AP 1310 if the STA 1330 is associated with the AP 1310. Additionally, or alternatively, the AP 1310 and the another AP 1320 may include a transmitter/receiver 1312, 1322 and a processing circuit 1314, 1324 configured to perform all or part of the methods described herein with reference to FIGs. 3-11.

The signals transmitted by one of the processing circuits 1314, 1324 can include an indication of a cross-BSS CSI status sent between AP 1310 and the another AP 1320. For example, the STA 1330 may not be associated with the AP 1310 and thus the AP 1310 may overhear communications between the STA 1330 and the another AP 1320 associated with the STA 1330. The another AP 1320 can accordingly determine that the AP 1310 has received a cross-BSS CSI report from, for example, the STA 1330.

Conversely, if the STA 1330 is associated with AP 1310, then the AP 1310 can send a frame, such as an NDPA, to the STA 1330 to initiate a CSI measurement. The CSI measurement may be a cross BSS CSI measurement between the STA 1330 and the another AP 1320. The AP 1310 may also send a frame (e.g., BFRP) to the STA 1330 to request the CSI report. The STA 1330 may send the CSI report to the AP 1310 in response to the request. The another AP 1320 may overhear the CSI report sent from the STA 1330 to the AP 1310. Additionally, or alternatively, the AP 1310 may send the CSI report to the another AP 1320 via, for example, via a wired or backhaul connection with the another AP 1320. The CSI report may comprise or include a cross-BSS CSI report. The another AP 1320 may send an indication to the AP 1310 that the CSI report was received.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
detecting (1110), with a first access point, AP, (AP1) an overlapping basic service set, BSS, (100) between the first AP (AP1) and a second AP (AP2);
transmitting (1120), with the first AP (AP1), an indication of whether the first AP (AP1) received a cross-BSS channel state information, CSI, report (214c); and
coordinating (1130), with the second AP (AP2) by the first AP (AP1), to perform a coordinated beamforming, Co-BF, procedure based on the cross-BSS CSI report (214c).

2. The method of claim 1, further comprising the first AP (AP1) transmitting the indication by transmitting one of a receipt indication that the first AP (AP1) received the cross-BSS CSI report (214c) and a failed receipt indication that the first AP (AP1) did not receive the cross-BSS CSI report (214c).

3. The method of claim 1 or 2, further comprising receiving, with the second AP (AP2), the indication of whether the first AP (AP1) received the cross-BSS CSI report (214c).

4. The method of any one of claims 1 to 3, further comprising the first AP (AP1) indicating the receipt of the cross-BSS CSI report (214c) by one of transmitting over-the-air, overhearing, and transmitting via a wired backhaul connection the indication of the receipt of the cross-BSS CSI report (214c) to the second AP (AP2).

5. The method of any one of claims 1 to 4, further comprising the first AP (AP1) indicating receipt of the cross-BSS CSI report (214c) by transmitting, with the first AP (AP1), a frame including one or more indication bits.

6. The method of claim 5, wherein the frame including the one or more indication bits is employed in protocols unrelated to the indication of whether the first AP (AP1) received the cross-BSS CSI report (214c).

7. The method of claim 5 or 6, wherein the frame including the one or more indication bits is transmitted in a media access control, MAC, layer of a transmission received by the second AP (AP2).

8. The method of any one of claims 1 to 7, further comprising transmitting the indication of whether the first AP (AP1) received the cross-BSS CSI report (214c) in response to the first AP (AP1) receiving a request from the second AP (AP2).

9. The method of any of claims 1 to 8, further comprising one of the second AP (AP2) and the first AP (AP1) initiating the transmission, by the first AP (AP1), of the indication of whether the first AP (AP1) received the cross-BSS CSI report (214c).

10. The method of any one of claims 1 to 9, further comprising transmitting, with the second AP (AP2), the cross-BSS CSI report (214c) to the first AP (AP1) and receiving, with the first AP (AP1), the cross-BSS CSI report (214c).

11. A system comprising:
a first AP (AP1) having an overlapping basic service set, BSS, (100) with a second AP (AP2), the first AP (AP1) being configured to transmit an indication of whether the first AP (AP1) received a cross-BSS CSI report (214c) from the second AP (AP2);
wherein the first AP (AP1) is configured to coordinate, with the second AP (AP2), to perform a coordinated beamforming, Co-BF, procedure based on the cross-BSS CSI report (214c).

12. The system of claim 11, wherein the first AP (AP1) is further configured to transmit the indication by transmitting one of a receipt indication that the first AP (AP1) received the cross-BSS CSI report (214c) and a failed receipt indication that the first AP (AP1) did not receive the cross-BSS CSI report (214c).

13. The system of claim 11 or 12, wherein the second AP (AP2)is further configured to receive the indication of whether the first AP (AP1) received the cross-BSS CSI report (214c).

14. The system of any one of claims 11 to 13, wherein the first AP (AP1) is further configured to indicate the receipt of the cross-BSS CSI report (214c) by one of transmitting over-the-air, overhearing, and transmitting via a wired backhaul connection the indication of the receipt of the cross-BSS CSI report (214c) to the second AP (AP2).

15. The system of any one of claims 11 to 14, wherein the first AP (AP1) is further configured to indicate receipt of the cross-BSS CSI report (214c) by transmitting a frame including one or more indication bits.
